# EUROPÄISCHE PATENTSCHRIFT

(11) **EP 4 426 535 B1**
(45) Veröffentlichungstag und Bekanntmachung des Hinweises auf die Patenterteilung: **02.09.2026**
(21) Anmeldenummer: 22813497.9
(22) Anmeldetag: 02.11.2022
(51) Int. Cl.: B29C 35/16, B29C 51/42, B65B 47/00

(54) **VERPACKUNGSMASCHINE MIT EINEM GEKÜHLTEN FORMWERKZEUG**
PACKAGING MACHINE HAVING A COOLED MOLDING TOOL
MACHINE D'EMBALLAGE DOTÉE D'UN OUTIL DE MOULAGE REFROIDI

(30) Priorität: 05.11.2021 DE 102021212480; 11.11.2021 DE 102021212721; 26.11.2021 DE 102021213334; 18.03.2022 DE 102022202680; 06.10.2022 DE 102022210545; 31.10.2022 DE 102022211530
(43) Veröffentlichungstag der Anmeldung: 11.09.2024
(73) Patentinhaber: Gea Food Solutions Germany GmbH, 35216 Biedenkopf-Wallau (DE)
(72) Erfinder: PAUL, Reiner, 35232 Dautphetal-Elmshausen (DE)
(74) Vertreter: Kutzenberger Wolff & Partner
(86) Internationale Anmeldenummer: PCT/EP2022/080537
(87) Internationale Veröffentlichungsnummer: WO 2023/078918

(56) Entgegenhaltungen:
- EP-B1- 3 390 234
- WO-A1-2017/089572
- DE-A1- 102019 204 821
- US-A- 3 958 394
- US-A1- 2008 152 772

## Beschreibung

Die vorliegende Erfindung betrifft ein Formwerkzeug zum Formen eines Verpackungsmaterials, insbesondere einer Monokunststofffolie, in einer Verpackungsmaschine. Des Weiteren betrifft die vorliegende Erfindung die Verpackungsmaschine selbst sowie ein Verfahren zum Formen einer Materialbahn bzw. zum Herstellen einer Verpackungsmulde.

Gekühlte Formwerkzeuge sind aus dem Stand der Technik, wie beispielsweise der US 3 958 394 A, der WO 2017/089572 B1, der EP 3 390 234 B1, der DE 10 2019 204821 sowie der US 2008/152772 A1 bekannt und sind oftmals Teil einer Verpackungsmaschine. Bei diesen Verpackungsmaschinen wird in eine plane Materialbahn, beispielsweise eine Folienbahn, eine Mulde durch Tiefziehen eingeformt, die dann anschließend mit dem Verpackungsgut, beispielsweise ein Lebensmittel oder ein Medizinartikel oder sonstiger Non-Food-Artikel befüllt wird. Dafür muss die Materialbahn vor dem Tiefziehen mit einem Heizelement erwärmt werden. Insbesondere bei Monofolien, die aus einem einzigen Material bestehen, muss das Erwärmen schnell, mit hohem Energieeintrag, gleichmäßig und in einem sehr kleinen Temperaturfenster erfolgen. Beim oder nach dem Formen wird die geformte Materialbahn gekühlt. Insbesondere bei Monofolien muss die Kühlung der geformten Materialbahn schnell erfolgen, weil ansonsten keine formstabilen und/oder passgenauen Verpackungsmulden erzielt werden, weil beispielsweise Rückschrumpf entstehen kann. Diesen Anforderungen werden herkömmliche Formwerkzeuge nicht oder nur unzureichend gerecht.

Es war deshalb die Aufgabe der vorliegenden Erfindung ein Formwerkzeug und eine Verpackungsmaschine sowie ein Verfahren zum Formen einer Materialbahn zur Verfügung zu stellen, die die Nachteile des Standes der Technik nicht aufweisen.

Gelöst wird die Aufgabe durch ein Formwerkzeug gemäß Anspruch 1 und einer Verpackungsmaschine gemäß Anspruch 7.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Dieser Gegenstand der vorliegenden Erfindung betrifft ein Formwerkzeug, das zum Formen, insbesondere Tiefziehen, einer Materialbahn in einer Verpackungsmaschine eingesetzt wird. Die Materialbahn ist beim Formen vorzugsweise stationär und es wird ein Format von mehreren Verpackungsmulden gleichzeitig in die Materialbahn eingeformt. Dafür weist das erfindungsgemäße Formwerkzeug ein Format von X x Y Formschalen auf, mindestens jedoch eine Formschale, die jeweils eine Matrize aufweisen, in die die Materialbahn hineingedrückt und/oder gezogen wird. Insbesondere sobald Kontakt zwischen der Materialbahn und der Formschale besteht, wird die Materialbahn gekühlt.

Die Formschalen eines Formats können aus einem Stück gefertigt, beispielsweise in einen Block spanabhebend gefertigt sein. Eine Formschale kann aber auch aus mehreren Teilen bestehen, beispielsweise einem Randbereich und einem separaten Boden. Der Boden kann beweglich sein, beispielsweise um Verpackungsmulden mit unterschiedlicher Tiefe produzieren zu können. Die Formschale oder Teilbereiche der Formschale können spanabhebend oder als 3D-Druck gefertigt sein. Die Formschale weist vorzugsweise zumindest abschnittsweise Kanäle auf, durch die ein Unterdruck zwischen der Materialbahn und der Oberfläche der Formschale erzeugt werden kann, mit dem die Materialbahn in Richtung der Formschale gezogen und/oder mit dem der Kontakt zwischen der Materialbahn und der Formschale verbessert wird.

Die Kühlung der Formschalen erfolgt erfindungsgemäß durch erzwungene Konvektion; d.h. mittels eines sich bewegenden, insbesondere gepumpten, Kühlmittels, beispielsweise einer kalten Flüssigkeit, insbesondere kaltem Wasser oder einer kalten wässrigen Lösung oder einem flüssigen Gas, oder kalter Luft, wobei Wasser oder eine wässrige Lösung oder ein flüssiges Gas bevorzugt ist. Das Kühlmittel soll vorzugsweise in der Lebensmittelverarbeitung zugelassen sein. Vorzugsweise wird das Kühlmittel im Kreislauf gefahren, der eine Pumpe und eine Wärmeenergiesenke aufweist. Die Formschalen können Teil eines Kühlkreislaufs hier der Verdampfer, sein, der beispielsweise von Kühlschränken oder Klimaanlagen bekannt ist.

Durch dieses Kühlmittel wird die Fläche der Formschale, mit der die Materialbahn beim Formen in Berührung kommt, vorzugsweise so gekühlt, dass sich beim Kontakt mit der erwärmten Materialbahn die Temperatur der Formschale nicht oder nur unwesentlich erhöht. Die geformte Materialbahn, insbesondere die Verpackungsmulden, behalten dadurch die gewünschte tiefgezogene Form bzw. ausgeprägte Kontur bei. Ein sogenanntes "Rückschrumpfen" ist zumindest minimiert, was ansonsten beispielsweise zum ungewünschten Verrunden von Konturkanten führen würde. Eine Kühlung nur des Rahmens, in dem die Formschalen vorgesehen sind, ist insbesondere bei der Verarbeitung von Monofolien, nicht ausreichend. Eine Kühlung der Formschalen nur durch Wärmeleitung, Strahlung und/oder natürliche Konvektion und/oder Konvektion, die durch eine Bewegung des gesamten Werkzeuges hervorgerufen wird, ist unzureichend.

Die Kühlung der Kontaktfläche einer Formschale muss dabei nicht gleichmäßig erfolgen, sondern kann lokal unterschiedlich sein. Beispielsweise können Bereiche der geformten Materialbahn, die besonders zum Rückschrumpfen neigen, besonders intensiv gekühlt werden. Dies kann zum Beispiel durch eine gezielte Führung des Kühlmittelstroms erreicht werden.

Um die Kühlung durch Konvektion zu erreichen, ist beispielsweise ein Kühlkanal in jeder Formschale vorgesehen, durch den das Kühlmittel geleitet wird. Vorzugsweise weist jede Formschale oder jede Matrize, in der eine Verpackungsmulde geformt wird, ihren eigenen Kanal auf, so dass die Kühlung jeder Formschale vorzugsweise zumindest im Wesentlichen gleich und/oder unabhängig von der Kühlung der anderen Formschalen des Formates ist. Alternativ oder zusätzlich weisen Gruppen von Formschalen einen gemeinsamen Kanal auf.

Vorzugsweise weist jede Formschale oder Matrize des Formwerkzeuges einen Kühlmittelzulauf und einen Kühlmittablauf auf. Der Zulauf jeder Formschale ist vorzugsweise mit einem Sammelkanal verbunden, aus dem das Kühlmittel für die Formschalen entnommen wird, so dass das Kühlmittel für alle Formschalen dieselbe Vorlauftemperatur aufweist und sich die Kühlung der Formschalen nicht oder allenfalls geringfügig gegenseitig beeinflusst.

Vorzugsweise ist der Kanal in jeder Formschale möglichst nahe an deren Kontaktfläche mit der Materialbahn vorgesehen, so dass die Kühlung der Materialbahn möglichst unmittelbar erfolgt.

Alternativ oder zusätzlich kann die der Materialbahn abgewandte Seite der Formschale von einem Kühlmittel umspült werden, das die zur Kühlung notwendige Konvektion zur Verfügung stellt. Dafür ist besonders bevorzugt unterhalb der Formschalen, beispielsweise zwischen den Formschalen und dem Rahmen und/oder zwischen den Formschalen und einer Trägerplatte, auf der die Formschalen montiert sind, ein Hohlraum vorgesehen, der von einem Kühlmittel durchströmt wird. Der Hohlraum kann Kanäle aufweisen, die das Kühlmittel entlang einer bestimmten Bahn leitet. Der Hohlraum kann Strömungshindernisse oder Mischer aufweisen, um das Kühlmittel zu durchmischen und/oder eine turbulente Strömung zu erzielen.

Die Formschalen eines Formates können gleich oder unterschiedlich gekühlt sein, wobei es bevorzugt ist, dass alle Formschalen in derselben Zeiteinheit auf dieselbe Temperatur oder dasselbe Temperaturprofil gekühlt und/oder gehalten werden. Beispielsweise kann es bevorzugt sein, wenn Formschalen im Randbereich des Formates weniger gekühlt werden als im Zentralbereich des Formates.

Erfindungsgemäß weist das Formwerkzeug eine Trägerplatte auf. Die Formschalen sind vorzugsweise direkt oder indirekt mit dieser Trägerplatte verbunden. Die Trägerplatte kann aus einer oder mehreren, insbesondere parallelen, vorzugsweise horizontal vorgesehenen, Platten bestehen, wobei zwischen den Platten ein Abstand vorgesehen sein kann, dessen Volumen als Kühlmittelzulauf oder -ablauf und/oder als Kühlmittelverteilung zu den einzelnen Formschalen genutzt werden kann.

Erfindungsgemäß ist in der Trägerplatte und/oder in dem Rahmen eine Kühlmittelverteilung und/oder Kühlmittelzuleitung zu den Formschalen vorgesehen. Dafür kann die Trägerplatte und/oder der Rahmen eine oder mehrere Leitungen für das Kühlmittel aufweisen. Von dem Rahmen und/oder der Trägerplatte strömt das Kühlmittel dann zu den Formschalen und/oder davon weg. Der Rahmen und/oder die Trägerplatte können zumindest teilweise als 3D-Druck gedruckt werden, um bezüglich der Führung der Kühlkanale keine maschinellen Restriktionen zu haben. Der Rahmen und/oder die Trägerplatte können aber zumindest abschnittsweise spanabhebend gefertigt sein.

Vorzugsweise sind die Formschalen aus einem Material, insbesondere einem Metall, mit einem hohen Wärmeleitkoeffizienten gefertigt, insbesondere als 3D-Druck gedruckt. Ein bevorzugtes Material ist Aluminium.

Gemäß eines bevorzugten Gegenstands der vorliegenden Erfindung sind die Formschalen bzw. ein Teil der Formschale mit einem Antrieb höhenverstellbar relativ zu dem Rahmen des Werkzeugs und/oder auf einer Trägerplatte vorgesehen. Die Höhenverstellung, beispielsweise des Bodens der Formschale, kann zur Veränderung des Volumens der Matrize, insbesondere deren Tiefe, und damit der Tiefe der resultierenden Verpackungsmulde verwendet werden. Bei dieser bevorzugten Ausführungsform wird die Formschale oder ein Teil der Formschale, beispielweise deren Boden, vor Produktionsbeginn in eine gewünschte Höhe gefahren und verbleibt dann dort während des gesamten Formvorgangs der Materialbahn. Alternativ oder zusätzlich kann die Höhenverstellung, beispielsweise des Bodens der Formschale oder der gesamten Formschale relativ zu dem Rahmen des Werkzeugs zur Veränderung der Kontaktzeit zwischen Materialbahn und zumindest einer Formschale oder einem Teil der Formschale verwendet werden. Bei dieser Ausführungsform wird die Formschale oder ein Teil einer Formschale vorm und/oder beim Formen in Richtung der Materialbahn verfahren, insbesondere angehoben, und bewegt sich dann, insbesondere nachdem ein Kontakt zwischen der Materialbahn und der Formschale oder einem Teil einer Formschale vorliegt, gemeinsam mit der Materialbahn, insbesondere nach unten, und vorzugsweise so, dass der Kontakt zwischen der Materialbahn und der Formschale erhalten bleibt. Durch diese bevorzugte Ausführungsform der vorliegenden Erfindung wird ein besonders schnelles oder intensives Abkühlen der Materialbahn erreicht, weil die Materialbahn nicht erst bei Erreichen ihrer abschließenden Form mit der Formschale in Kontakt kommt, sondern weil die Kontaktzeit zwischen Materialbahn und Formschale maximiert ist. Die Materialbahn wird vorzugsweise mittels Unterdruck an die Formschale geformt und mit dieser reversibel in Kontakt gehalten. Zur weiteren Verformung wird die Formschale dann nach unten bewegt und dabei die Materialbahn vorzugsweise weiter geformt, insbesondere tiefgezogen. Während der gesamten Kontaktzeit zwischen Materialbahn und Formschale wird die Materialbahn gekühlt.

Alternativ oder zusätzlich kann die Höhenverstellung so ausgeführt sein, dass nach abgeschlossener Formung der Materialbahn die Formschale bzw. ein Teil der Formschale zumindest zeitweise und zumindest abschnittsweise noch in Kontakt mit der Materialbahn verbleiben, während das Formwerkzeug bereits öffnet, um die Materialbahn zum Weitertransport freizugeben, beispielsweis indem die Formschale bzw. ein Teil der Formschale mit einem Antrieb relativ zu dem Rahmen des Werkzeugs und/oder auf einer Trägerplatte bewegt werden, insbesondere nach oben, und vorzugsweise so, dass der Kontakt zwischen der Materialbahn und der Formschale zunächst erhalten bleibt, vorzugsweise bis der maximal gewünschte Hub der Höherverstellung der Formschale erreicht ist, um die Kontaktzeit zu verändern, insbesondere zu verlängern. Durch diese bevorzugte Ausführungsform der vorliegenden Erfindung wird ein besonders schnelles oder intensives Abkühlen der Materialbahn erreicht, weil die Materialbahn nach Erreichen ihrer abschließenden Form mit der Formschale noch für einen zusätzlichen Zeitabschnitt in Kontakt bleibt, wobei die Kontaktzeit zwischen Materialbahn und Formschale maximiert wird. Nach Erreichen des maximal gewünschten Hubes der Höhenverstellung der Formschale öffnet vorzugsweise das Formwerkzeug noch weiter, wodurch der Kontakt zwischen der Materialbahn und der Formschale beendet wird, da die Formschale nun relativ von der Materialbahn wegbewegt wird, mindestens bis die Materialbahn für den Weitertransport freigegeben ist. Alternativ oder zusätzlich kann die Höhenverstellung nach Weitertransport der Materialbahn und vorzugsweise nach erneutem Schließen des Formwerkzeugs als Vorbereitung für das Formen des nächsten Formats in der zuvor erreichten gewünschten oder einer anderen bevorzugten Hubstellung verbleiben, um die zu formende Materialbahn quasi abzuholen.

Vorzugsweise ist zwischen dem Rahmen und dem äußeren Umfang des Formats an Formschalen und/oder zwischen dem Rahmen und der Trägerplatte eine Dichtung vorgesehen, beispielsweise um ein Entweichen von Kühlflüssigkeit oder Kühlgas zu vermeiden.

Vorzugsweise ist eine Kühlflüssigkeitszuleitung und eine Kühlflüssigkeitsableitung durch den Rahmen geführt.

Für den Fall, dass das Volumen, insbesondere die Ziehtiefe der Formschale durch Einlegeplatten variiert wird, weisen diese vorzugsweise einen Kühlmittelkanal auf und/oder werden von einem Kühlmittel umströmt.

Vorzugsweise ist an den Formschalen mindestens ein Temperatursensor vorgesehen, um deren Temperatur zu messen. Diese Messung kann beispielsweise für die Regelung des Kühlmittelstroms oder dessen Vorlauftemperatur eingesetzt werden. Alternativ oder zusätzlich kann auch die Temperatur des Kühlmittels im Bereich der Formschale oder stromabwärts davon gemessen werden und gegebenenfalls zu der o.g. Regelung herangezogen werden.

Vorzugsweise ist die Materialbahn eine Monokunststofffolie bzw. Monofolie, d.h. eine Kunststofffolie, die aus mindestens einer Schicht und/oder einem einzigen Material oder zum überwiegenden Anteil aus einem einzigen Material, beispielsweis zu mindestens 95 Gew.-% aus einem Material und/oder einem Substanzgemisch aus einer Materialgruppe besteht und vorzugsweise als wiederverwertbar und/oder mittelgradig oder hochgradig recyclingfähig gilt; im Gegensatz zu Mehrschichtfolien oder Folien, die aus einem Substanzgemisch unterschiedlicher Materialgruppen bestehen, die als nicht oder höchstens geringgradig recyclingfähig gelten. Vorzugsweise ist das Material der Monofolie zu 100 Gew.-% oder zum überwiegenden Anteil, insbesondere zu mindestens 95 Gew.-% Polypropylen (PP), Polyethylen (PE) oder Polyethylenterephthalat (PET) oder ein Substanzgemisch aus nur einer Materialgruppe, beispielsweise der Polyolefine, beispielsweise PP und PE.

Beispielsweise kann eine Monofolie zu mindestens 95 Gew.-% aus mindestens einer PP-Schicht bestehen, die mit einer Siegel- oder Peelschicht aus PE verbunden ist. Vorzugsweise beträgt die Dicke der Monofolie 200 - 500 µm, besonders bevorzugt 290 - 350 µm. Vorzugsweise ist die Temperatur des Temperaturfensters 135 - 137 °C bzw. umfasst das Temperaturfenster einen Bereich von vorzugsweise 3 Kelvin. Vorzugsweise wird die geformte Monofolie auf 50 - 120 °C abgekühlt.

Vorzugsweise werden 0,2 - 5 Sekunden benötigt, um die Materialbahn auf die gewünschte Temperatur zu kühlen, bei der dann ein Weitertransport möglich ist.

Die Aufgabe wird auch mit einer Verpackungsmaschine gemäß Anspruch 7 gelöst.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Dieser Gegenstand der vorliegenden Erfindung betrifft eine Verpackungsmaschine zur Herstellung einer Verpackung, bei der eine Untermaterialbahn, beispielsweise eine Kunststofffolie oder eine Materialbahn, die insbesondere eine Karton-, Papier oder eine sonstige von Kunststoff verschiedene Schicht aufweist, von einer Vorratsrolle abgerollt und vorzugsweise intermittierend/taktweise entlang der Verpackungsmaschine in einer Transportebene transportiert wird. In einer Formstation wird diese Untermaterialbahn dann zunächst mittels eines Tiefziehwerkzeugs geformt, um beispielsweise eine Mulde und/oder eine Struktur, insbesondere eine Anti-rutsch-Struktur in die Untermaterialbahn zu formen. Die Formstation weist in der Regel ein Unter- und ein Oberwerkzeug auf, die zum Formen relativ aufeinander zu und zum Weitertransport der Untermaterialbahn relativ voneinander wegbewegt werden. Das Unterwerkzeug befindet sich dabei unterhalb und das Oberwerkzeug oberhalb der Transportebene der Untermaterialbahn. In der Regel werden in der erfindungsgemäßen Verpackungsmaschine mehrere Verpackungen, die in einem sogenannten Format angeordnet sind, gleichzeitig bearbeitet und im Folgenden gleichzeitig entlang der Verpackungsmaschine transportiert. Vorm und/oder beim Tiefziehen wird die Untermaterialbahn mit einem Heizelement beheizt. Nachfolgend wird die Untermaterialbahn mit einem Verpackungsgut, insbesondere einem Lebensmittel, wie beispielsweise Wurst, Schinken oder Käse, belegt und in einem nächsten Schritt in einer Siegelstation mit einer Oberfolie bzw. Obermaterialbahn verschlossen, wobei die Oberfolie in der Regel an die Unterfolienbahn gesiegelt wird. Dafür wird ein weiteres Heizelement eingesetzt, das die für die Siegelung benötigte Wärmeenergie zur Verfügung stellt. Anschließend wird die so fertiggestellte Verpackung vereinzelt, indem die Verpackung aus der Unter- und Obermaterialbahn ausgeschnitten wird, beispielsweise mit einem Quer- und Längsschneider. Der Längs- bzw. Querschneider kann auch als Konturstanze zur Verfügung gestellt werden. Die Obermaterialbahn wird ebenfalls von einer Vorratsrolle abgerollt und kann auch tiefgezogen werden, beispielsweise in einer Oberfolienformstation. Bezogen auf die Transportrichtung der jeweiligen Folienbahn befindet sich stromabwärts von wenigstens einer Vorratsrolle vorzugsweise ein Tänzer, der die Spannung in der jeweiligen Materialbahn zumindest im Wesentlichen konstant hält. Bei dem Tänzer kann es sich um einen Linear- oder einen Rotationstänzer handeln.

Vorzugsweise befindet sich das Heizelement, das die tiefzuziehende Materialbahn erwärmt im und/oder stromaufwärts von dem/den Formwerkzeug(en) der Formstation. Das Heizelement kann mit dem Werkzeug, beispielsweise dem Oberwerkzeug, und/oder dessen Rahmen fest verbunden sein und kann beispielsweise mit diesem gemeinsam vertikal bewegt werden.

In der Formstation wird nach dem Erwärmen die Materialbahn geformt, insbesondere tiefgezogen und dabei und/oder nach dem Formen gekühlt.

Die Aufgabe wird auch mit einem Verfahren zum Formen einer Materialbahn gemäß Anspruch 8 gelöst.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Dieser Gegenstand der vorliegenden Erfindung betrifft ein Verfahren zum Formen einer Materialbahn, beispielsweise in einer Verpackungsmaschine, insbesondere in einer sogenannten "Form-Fill-Seal"-Verpackungsmaschine.

Bei der Materialbahn handelt es sich vorzugsweise um eine Kunststofffolie, insbesondere eine sogenannte Monofolie, d.h. eine Folie, die vorzugsweise aus einem einzigen Material besteht, insbesondere PP, PE oder PET. Erfindungsgemäß wird die Materialbahn vor deren Verformung, insbesondere durch Tiefziehen, erwärmt. Diese Erwärmung erfolgt mit dem oben beschriebenen Heizelement.

Durch das erfindungsgemäße Verfahren ist sichergestellt, dass die Materialbahn schnell und so gekühlt wird, dass ein Rückschrumpfen zumindest minimiert wird.

Vorzugsweise bewegen sich die gekühlten Formschalen beim Formen mit der Materialbahn während deren Verformung mit.

Vorzugsweise erfolgt die Kühlung mit einem flüssigen Kühlmittel, dessen Volumenstrom besonders bevorzugt geregelt ist.

Vorzugsweise wird mit dem erfindungsgemäßen Verfahren eine Verpackungsmulde, insbesondere aus einer Monofolie, hergestellt.

Ein weiterer bevorzugter Gegenstand der vorliegenden Erfindung ist ein Verfahren zum Formen einer Materialbahn, bei dem die Materialbahn zum Aufheizen in Kontakt zu einem Heizelement gebracht und anschließend in einem Format von Formschalen geformt und gekühlt wird, wobei sich nach dem Formen der Materialbahn die Bewegung des Rahmens und der Formschale von der Materialbahn weg unterscheiden.

Die zu diesem Gegenstand der vorliegenden Erfindung gemachten Ausführungen gelten für die anderen Gegenstände gleichermaßen und umgekehrt. Merkmale dieses Gegenstands der vorliegenden Erfindung können in andere Gegenstände aufgenommen werden und umgekehrt.

Vorzugsweise eilt der Rahmen der Formschale voraus. Dadurch ist es beispielsweise möglich, dass der Kontakt zwischen dem Rahmen des Unterwerkzeugs und der Materialbahn aufgelöst oder aufgehoben wird, die Formschale aber noch in Kontakt mit der Materialbahn bleibt, so dass sie weiter gekühlt wird.

Im Folgenden wird die Erfindung anhand der Figuren 1 bis 3 erläutert. Diese Erläuterungen sind lediglich beispielhaft und schränken den allgemeinen Erfindungsgedanken nicht ein.
- **Figur 1**: zeigt schematisch die erfindungsgemäße Verpackungsmaschine.
- **Figuren 2 - 3**: zeigen jeweils eine Ausführungsform des erfindungsgemäßen Formwerkzeuges

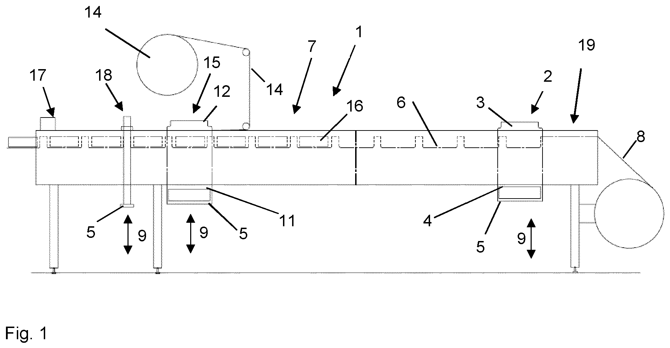

**Figur 1** zeigt die erfindungsgemäße Verpackungsmaschine 1, die eine Formstation 2, eine Füllstation 7 sowie eine Siegelstation 15 aufweist. Die Verpackungsmaschine kann ein sogenannter Thermoformer sein. Eine Untermaterialbahn 8, hier eine Kunststofffolie 8, insbesondere eine Monofolie aus PP oder PET, wird von einer Vorratsrolle abgezogen und taktweise entlang der erfindungsgemäßen Verpackungsmaschine von rechts nach links transportiert. Bei jedem Takt wird die Untermaterialbahn 8 um eine Formatlänge/Vorschublänge weitertransportiert. Dafür weist die Verpackungsmaschine zwei Transportmittel 21 (siehe Fig. 5), in dem vorliegenden Fall jeweils zwei Endlosketten, auf, die rechts und links von der Untermaterialbahn 8 angeordnet sind. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Eingangsbereich und/oder im Ausgangsbereich können miteinander, vorzugsweise durch eine starre Welle, verbunden sein. Jedes Transportmittel weist eine Vielzahl von Klemmmitteln/Greifern auf, die die Untermaterialbahn 8 im Einlaufbereich klemmend ergreifen und die Bewegung des Transportmittels auf die Untermaterialbahn 8 übertragen. Im Auslaufbereich der Verpackungsmaschine wird die klemmende Verbindung zwischen dem Transportmittel und der Untermaterialbahn 8 wieder gelöst. Stromabwärts von dem Einlaufbereich und stromaufwärts von der Formstation 2 ist ein Heizelement vorgesehen, das die Untermaterialbahn 8 erwärmt, insbesondere wenn diese stillsteht. Die Formstation 2 weist ein Unterwerkzeug 4 und ein Oberwerkzeug 3 auf. Das Unterwerkzeug 4 kann, wie durch den Doppelpfeil angedeutet, auf- und ab-bewegt werden, wobei es zum Formen nach oben in Richtung der Untermaterialbahn 8 und zum Weitertransport der Untermaterialbahn 8 nach unten bewegt wird. In der angehobenen Stellung wird die Untermaterialbahn vorzugsweise zwischen den beiden Werkzeugen 3, 4 geklemmt. Das Unterwerkzeug 4 kann auf einem Hubtisch 5 angeordnet sein, der, wie durch den Doppelpfeil symbolisiert wird, vertikal verstellbar sein kann, um die oben beschriebene Bewegung des Unterwerkzeugs zu erzeugen. Im weiteren Verlauf der Verpackungsmaschine werden die hier angedeuteten in die Untermaterialbahn geformten Verpackungsmulden 6 oder die Untermaterialbahn 8 dann in der Füllstation 7 mit dem Verpackungsgut 16 belegt. In der sich daran anschließenden Siegelstation 15, die ebenfalls aus einem Oberwerkzeug 12 und einem gegebenenfalls vertikal verstellbaren Unterwerkzeug 11 besteht, wird eine Oberfolie 14 stoffschlüssig durch Siegeln an der Untermaterialbahn 8 befestigt. Dadurch wird die Bewegung der Untermaterialbahn 8 auf die Obermaterialbahn 14 übertragen. Auch in der Siegelstation werden das Oberwerkzeug und/oder wahlweise das Unterwerkzeug vor und nach jedem Folientransport abgesenkt bzw. angehoben. Auch die Oberfolie 14 kann in Transportmitteln geführt sein bzw. von Transportketten transportiert werden, wobei sich diese Transportmittel dann nur vor der Siegelstation und ggf. stromaufwärts erstrecken. Ansonsten gelten die Ausführungen, die zu den Transportmitteln der Unterfolie gemacht wurden. Auch die Oberfolie kann mit einem Heizelement angewärmt und/oder tiefgezogen werden. Für das Siegeln ist als Unterwerkzeug 11 beispielweise ein Siegelrahmen vorgesehen, der pro Verpackungsmulde eine Öffnung aufweist, in die die gegebenenfalls vorhandene Verpackungsmulde beim Siegeln, d.h. bei der Aufwärtsbewegung des Untersiegelwerkzeugs, eintaucht. Zum Siegeln werden die Ober- und die Untermaterialbahn zwischen dem Ober- und dem Unterwerkzeug 12, 11 zusammengepresst und verbinden sich unter dem Einfluss von Wärme und Druck. Nach dem Siegeln werden die Werkzeuge 11, 12 wieder vertikal auseinanderbewegt. Zwischen der Vorratsrolle der Obermaterialbahn 14 und dem Siegelwerkzeug kann ein Tänzer, beispielsweise ein Rotationstänzer vorgesehen sein, der die Materialbahn 14 möglichst auf einer konstanten Spannung hält. Der Fachmann versteht, dass auch im Bereich der Untermaterialbahn 8 vorzugsweise ein Tänzer vorgesehen ist, vorzugsweise stromabwärts von der Vorratsrolle. Vorzugsweise handelt es sich bei dem Tänzer um einen Lineartänzer. Vor und/oder beim Siegeln der Obermaterialbahn an die Untermaterialbahn erfolgt in jeder Verpackungsmulde vorzugsweise ein Gasaustausch. Dafür wird die in der Verpackungsmulde vorhandene Luft zunächst teilweise abgesaugt und/oder durch ein Austauschgas ersetzt. Dafür können im Bereich jedes Formats in die Untermaterialbahn 8 im Bereich der Transportketten Löcher in die Untermaterialbahn eingebracht werden, durch die die Luft zwischen den Materialbahnen 8, 14 abgesaugt und/oder das Austauschgas eingeblasen wird. Im weiteren Verlauf der Verpackungsmaschine werden die fertiggestellten Verpackungen vereinzelt, was z.B. mit dem Querschneider 18 und dem Längsschneider 17 erfolgt. Der Querschneider 18 ist in dem vorliegenden Fall ebenfalls mit einer Hubeinrichtung 9 anhebbar bzw. absenkbar. Gemäß einer anderen Ausführungsform weist das Siegelwerkzeug 11, 12 eine Stanze auf, die die Unter- und die Obermaterialbahn vorm, beim und/oder nach dem Siegeln durchtrennt. Vorzugsweise werden bei jedem Takt mehrere Verpackungen gleichzeitig hergestellt, die in einem sogenannten Format als Matrix angeordnet sind. Vorzugsweise weist das Heizelement 19 Mittel auf, mit denen der Kontakt zwischen der Materialbahn und der Oberfläche des Heizelementes hergestellt oder verbessert werden kann. Derartige Mittel sind beispielsweise Unterdruckdüsen, die die Materialbahn in Richtung der Oberfläche des Heizelementes saugen.

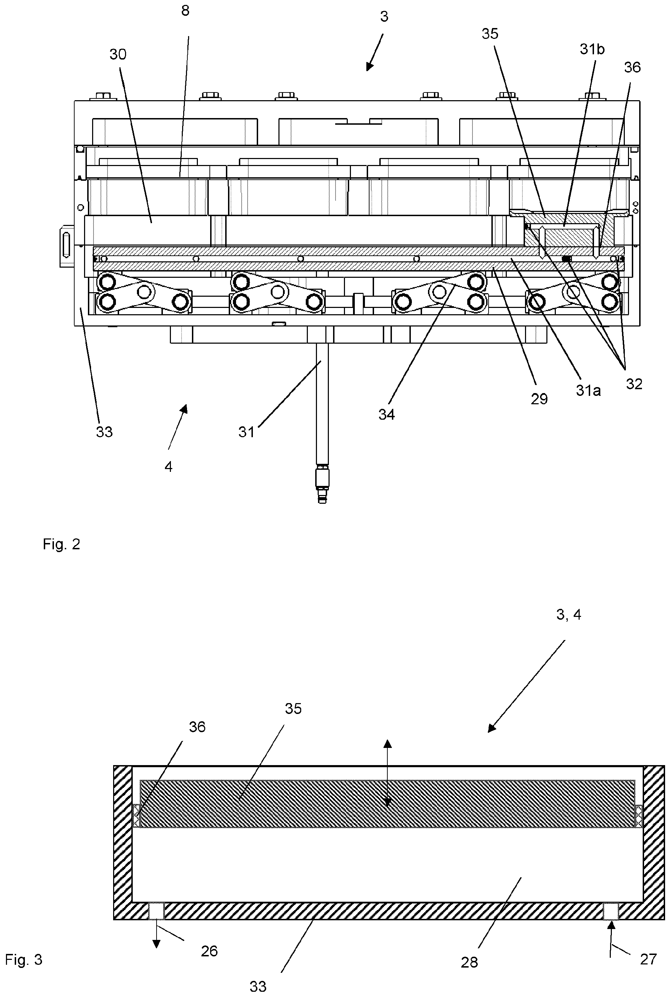

**Figur 2** zeigt eine erst Ausführungsform des Formwerkzeugs 3, 4 der Formstation 2, in dem vorliegenden Fall das Unterwerkzeug 4 und das Oberwerkzeug 3. Zumindest das Unterwerkzeug 4 ist, wie oben beschrieben anheb- absenkbar vorgesehen. Das Unterwerkzeug 4 weist einen Rahmen 33 auf, innerhalb dessen sich ein Format von Formschalen 35 befindet. Jede Formschale formt eine Verpackungsmulde 6 in die Materialbahn 8. Jede Formschale kann einstückig oder mehrteilig ausgeführt sein. Das Format an Formschalen kann ein- oder mehrstückig ausgeführt sein. Für das Formen ist die Materialbahn 8 stromabwärts von einem Heizelement 19 erwärmt worden und wird vorzugsweise zwischen den beiden Werkzeugen 3, 4 eingespannt. Bei der Materialbahn 8 handelt es sich vorzugsweise um eine Monokunststofffolie. Vorzugsweise weist jede Formschale Vakuumkanäle (nicht dargestellt) auf, mittels derer die erwärmte Materialbahn in die Formschale geformt wird. Alternativ oder zusätzlich kann ein Stempel (nicht dargestellt) vorhanden sein, der die Materialbahn 8 formt. In dem vorliegenden Fall weist das Werkzeug optional eine Trägerplatte 29 auf, an der die Formschalen vorgesehen, beispielsweise angeschraubt sind. Mittels des Antriebs 34 ist die Trägerplatte in ihrer vertikalen Position relativ zu dem Rahmen motorisch verstellbar, um beispielsweise unterschiedliche Verpackungsmuldenvolumina mit einem Werkzeug realisieren zu können. Die Trägerplatte 29 ist in dem vorliegenden Fall mittels zwei voneinander beabstandeten Platten realisiert. Das Volumen zwischen den Platten ist mit einer Kühlmittelzuführung 31, hier Kühlwasser verbunden, die beispielsweise als Schlauch oder teleskopierbar ausgeführt ist. Das Volumen zwischen den Platten dient als Zu- bzw. Ableitung des Kühlmittels zu bzw. von den einzelnen Formschalen. Zwischen den Platten der Trägerplatte 29 bzw. a deren Rand oder deren Oberfläche können ein Schottelement 32 bzw. eine Dichtung 36 vorgesehen sein um das Kühlmittel entlang eines bestimmten Weges zu führen und/oder eine ungewollte Leckage von Kühlmittel in das Werkzeug zu vermeiden. Die Kühlmittelführung ist vorzugsweise so gestaltet, dass allen Formschalen an deren Einlauf Kühlmittel mit derselben Temperatur zur Verfügung gestellt wird. Die Formschalen sind also bezüglich des Kühlmittelstroms, insbesondere des Zulaufs vorzugsweise parallel geschaltet. Vorzugsweise weist die Formschale 35 selbst einen Kanal 31, 31a, 31b auf, durch den das Kühlmittel strömt und sie kühlt. In dem vorliegenden Fall ist der Kanal 31, 31a, 31b eine Bohrung. Die Formschale mit dem Kanal 31, 31a, 31b kann aber auch als 3D-Druck hergestellt werden. Die Formschale ist vorzugsweise aus Metall, insbesondere Aluminium oder einem gut wärmeleitfähigen Kunststoff gefertigt. Mittels der Strömung des Kühlmittels in den Leitungen 31, 31a, 31b wird die für die Kühlung benötigte Konvektion erzeugt. Das Kühlmittel wird vorzugsweise im Kreis über eine Wärmesenke gefahren. Der Kreislauf weist mindestens eine Pumpe auf.

**Figur 3** zeigt eine Alternative oder eine Ergänzung zu der Ausführungsform gemäß Figur 2. In dem vorliegenden Fall ist zwischen der Formschale oder dem Format an Formschalen und dem Rahmen oder einer Trägerplatte ein Hohlraumvolumen vorgesehen. Durch eine vertikale Bewegung der Formschale kann dieses Volumen variieren. Das Volumen 28 wird, wie dargestellt von einem Kühlmittel, das über den Zustrom 27 in das Volumen und über den Ablauf wieder aus dem Volumen ausströmt, durchflutet. Dabei erfolgt mittels Konvektion eine Kühlung der Formschale 35. Ansonsten wird auf die Ausführungen zu Figur 2 verwiesen.

### Bezugszeichenliste:

- 1: Verpackungsmaschine
- 2: Formstation, Tiefziehstation
- 3: Oberwerkzeug der Tiefziehstation
- 4: Unterwerkzeug der Tiefziehstation
- 5: Hubtisch, Träger eines Werkzeugs der Siegel-, Tiefziehstation und/oder der Schneideinrichtung
- 6: Verpackungsmulde
- 7: Füllstation, Einlegestation
- 8: Materialbahn, Untermaterialbahn
- 9: Hubeinrichtung, Hub
- 10: Zentralbereich des Heizelementes
- 11: Unterwerkzeug der Siegelstation
- 12: Oberwerkzeug der Siegelstation
- 13: Unterteil des Materialbahnklemmmittels
- 14: Obermaterialbahn, Deckelmaterialbahn
- 15: Siegelstation
- 16: Verpackungsgut
- 17: Längsschneider
- 18: Querschneider
- 19: Heizelement
- 20: Laufrichtung
- 26: Kühlmittelablauf
- 27: Kühlmittelzulauf
- 28: Hohlraum, insbesondere zwischen dem Rahmen und der Formschale
- 29: Trägerplatte
- 30: Formwerkzeug;
- 31, 31a, 31b: Kanal Leitung, Zuleitung Kühlung, Kühlwasserversorgung
- 32: Schott, Verschlussstopfen, Dichtung
- 33: Rahmen
- 34: Antrieb, Höhenverstellung
- 35: bewegliches Teil, Formschale
- 36: Dichtung

## Patentansprüche

1. Formwerkzeug (3, 4) einer Verpackungsmaschine mit einem Rahmen (33) und einem Format an Formschalen (35), in denen jeweils eine Materialbahn geformt wird und die gekühlt sind, wobei die Formschalen (35) jeweils durch Konvektion gekühlt sind, **dadurch gekennzeichnet, dass** es eine Trägerplatte (29) aufweist und
in der Trägerplatte (29) und/oder in dem Rahmen eine Kühlmittelverteilung oder Kühlmittelzuleitung zu den Formschalen vorgesehen ist.

2. Formwerkzeug nach Anspruch 1, **dadurch gekennzeichnet, dass** in der Formschale (35) eine Kühlmittelleitung (31b) vorgesehen ist.

3. Formwerkzeug nach einem Ansprüche 1 oder 2, **dadurch gekennzeichnet, dass** die der Materialbahn abgewandte Seite der Formschale (35) von einem Kühlmittel umspült ist.

4. Formwerkzeug nach einem der Ansprüche voranstehenden Ansprüche, **dadurch gekennzeichnet, dass** unterhalb der Formschalen ein Hohlraum (28) vorgesehen ist, der von einem Kühlmittel durchspült ist und/oder dass die Formschalen gedruckt sind und/oder dass die Formschalen oder Teile der Formschale mit einem Antrieb (34) höhenverstellbar sind.

5. Formwerkzeug nach einem der voranstehenden Ansprüche, **dadurch gekennzeichnet, dass** zwischen dem Rahmen und dem äußeren Umfang des Formats an Formschalen und/oder zwischen dem Rahmen und der Trägerplatte eine Dichtung vorgesehen ist.

6. Formwerkzeug nach einem der voranstehenden Ansprüche, **dadurch gekennzeichnet**, eine Kühlflüssigkeitszuleitung (27) und eine Kühlflüssigkeitsableitung (26) durch den Rahmen geführt ist.

7. Verpackungsmaschine (1) mit einer Formstation (2), einer Füllstation (7), einer Siegelstation und einem Längs- und/oder Querschneider (17, 18), wobei eine Materialbahn (8) entlang einer Laufrichtung (20), insbesondere taktweise, transportierbar ist, **dadurch gekennzeichnet, dass** sie ein Formwerkzeug gemäß einem der voranstehenden Ansprüche aufweist.

8. Verfahren zum Formen einer Materialbahn, wobei die Materialbahn zum Aufheizen in Kontakt zu einem Heizelement und anschließend in einem Format von Formschalen (35) geformt und gekühlt wird, **dadurch gekennzeichnet, dass** die Formschalen eines Formwerkzeugs gemäß einem der Ansprüche 1 - 6 durch Konvektion gekühlt werden.

9. Verfahren nach Anspruch 8, wobei eine Materialbahn eine Monofolie ist.

10. Verfahren nach Anspruch 8 oder 9, **dadurch gekennzeichnet, dass** sich die gekühlten Formschalen beim Formen mit der Materialbahn mitbewegen.

11. Verfahren nach einem der Ansprüche 8 - 10, **dadurch gekennzeichnet, dass** die Kühlung mit einem flüssigen Kühlmittel erfolgt, dessen Volumenstrom geregelt ist.

12. Verfahren nach einem der Ansprüche 8 - 11, zur Herstellung einer Verpackungsmulde, insbesondere aus einer Monofolie.

13. Verfahren nach einem der Ansprüche 8 - 12, **dadurch gekennzeichnet, dass** nach dem Formen der Materialbahn sich die Bewegung des Rahmens und der Formschale von der Materialbahn weg unterscheiden.

14. Verfahren nach Anspruch 13, **dadurch gekennzeichnet, dass** der Rahmen der Formschale vorauseilt.

## Claims

1. Forming tool (3, 4) of a packaging machine, comprising a frame (33) and a set of forming cavities (35), in each of which a material web is formed and which are cooled, wherein the forming cavities (35) are each cooled by convection, **characterized in that** it comprises a carrier plate (29), and **in that** a coolant distribution or coolant supply line to the forming cavities is provided in the carrier plate (29) and/or in the frame.

2. Forming tool according to claim 1, **characterized in that** a coolant line (31b) is provided in the forming cavity (35).

3. Forming tool according to claim 1 or 2, **characterized in that** the side of the forming cavity (35) facing away from the material web is flushed by a coolant.

4. Forming tool according to one of the preceding claims, **characterized in that** a cavity (28) is provided below the forming cavities, through which a coolant flows, and/or **in that** the forming cavities are printed, and/or **in that** the forming cavities or parts of the forming cavity are height-adjustable by means of a drive (34).

5. Forming tool according to one of the preceding claims, **characterized in that** a seal is provided between the frame and the outer periphery of the set of forming cavities and/or between the frame and the carrier plate.

6. Forming tool according to one of the preceding claims, **characterized in that** a cooling-liquid supply line (27) and a cooling-liquid discharge line (26) are routed through the frame.

7. Packaging machine (1) comprising a forming station (2), a filling station (7), a sealing station and a longitudinal and/or transverse cutter (17, 18), wherein a material web (8) is transportable along a direction of travel (20), in particular intermittently, **characterized in that** it comprises a forming tool according to one of the preceding claims.

8. Method for forming a material web, wherein the material web is brought into contact with a heating element for heating and is subsequently formed and cooled in a set of forming cavities (35), **characterized in that** the forming cavities of a forming tool according to one of claims 1 to 6 are cooled by convection.

9. Method according to claim 8, wherein a material web is a mono-film.

10. Method according to claim 8 or 9, **characterized in that** the cooled forming cavities move together with the material web during forming.

11. Method according to one of claims 8 to 10, **characterized in that** the cooling is effected with a liquid coolant whose volumetric flow rate is regulated.

12. Method according to one of claims 8 to 11, for producing a packaging tray, in particular from a mono-film.

13. Method according to one of claims 8 to 12, **characterized in that**, after forming of the material web, the movement of the frame and the movement of the forming cavity away from the material web differ from one another.

14. Method according to claim 13, **characterized in that** the frame leads ahead of the forming cavity.

## Revendications

1. Outil de formage (3, 4) d'une machine d'emballage, comprenant un cadre (33) et un ensemble d'alvéoles de formage (35), dans chacune desquelles une bande de matériau est formée et qui sont refroidies, les alvéoles de formage (35) étant chacune refroidies par convection, **caractérisé en ce qu'**il comporte une plaque support (29) et **en ce qu'**une répartition de liquide de refroidissement ou une conduite d'amenée de liquide de refroidissement vers les alvéoles de formage est prévue dans la plaque support (29) et/ou dans le cadre.

2. Outil de formage selon la revendication 1, **caractérisé en ce qu'**une conduite de liquide de refroidissement (31b) est prévue dans l'alvéole de formage (35).

3. Outil de formage selon la revendication 1 ou 2, **caractérisé en ce que** le côté de l'alvéole de formage (35) opposé à la bande de matériau est baigné par un liquide de refroidissement.

4. Outil de formage selon l'une des revendications précédentes, **caractérisé en ce qu'**une cavité (28) est prévue au-dessous des alvéoles de formage, laquelle est traversée par un liquide de refroidissement, et/ou **en ce que** les alvéoles de formage sont imprimées, et/ou **en ce que** les alvéoles de formage ou des parties de l'alvéole de formage sont réglables en hauteur au moyen d'un entraînement (34).

5. Outil de formage selon l'une des revendications précédentes, **caractérisé en ce qu'**un joint d'étanchéité est prévu entre le cadre et le pourtour extérieur de l'ensemble d'alvéoles de formage et/ou entre le cadre et la plaque support.

6. Outil de formage selon l'une des revendications précédentes, **caractérisé en ce qu'**une conduite d'amenée de liquide de refroidissement (27) et une conduite d'évacuation de liquide de refroidissement (26) sont guidées à travers le cadre.

7. Machine d'emballage (1) comprenant un poste de formage (2), un poste de remplissage (7), un poste de scellage et un dispositif de découpe longitudinale et/ou transversale (17, 18), une bande de matériau (8) étant transportable le long d'une direction de défilement (20), en particulier pas à pas, **caractérisée en ce qu'**elle comporte un outil de formage selon l'une des revendications précédentes.

8. Procédé de formage d'une bande de matériau, dans lequel la bande de matériau est mise en contact avec un élément chauffant en vue de son chauffage, puis est formée et refroidie dans un ensemble d'alvéoles de formage (35), **caractérisé en ce que** les alvéoles de formage d'un outil de formage selon l'une des revendications 1 à 6 sont refroidies par convection.

9. Procédé selon la revendication 8, dans lequel une bande de matériau est un monofilm.

10. Procédé selon la revendication 8 ou 9, **caractérisé en ce que** les alvéoles de formage refroidies se déplacent conjointement avec la bande de matériau lors du formage.

11. Procédé selon l'une des revendications 8 à 10, **caractérisé en ce que** le refroidissement est effectué au moyen d'un liquide de refroidissement dont le débit volumique est régulé.

12. Procédé selon l'une des revendications 8 à 11, pour la fabrication d'une barquette d'emballage, en particulier à partir d'un monofilm.

13. Procédé selon l'une des revendications 8 à 12, **caractérisé en ce qu'**après le formage de la bande de matériau, le mouvement du cadre et celui de l'alvéole de formage s'écartant de la bande de matériau diffèrent l'un de l'autre.

14. Procédé selon la revendication 13, **caractérisé en ce que** le cadre précède l'alvéole de formage.
